# EUROPÄISCHE PATENTSCHRIFT

(11) **EP 0 801 982 B1**
(45) Veröffentlichungstag und Bekanntmachung des Hinweises auf die Patenterteilung: **28.08.2002**
(21) Anmeldenummer: 97106393.8
(22) Anmeldetag: 17.04.1997
(51) Int. Cl.: B01L 3/02, G01N 1/00, G01N 1/20, F04B 9/04

(54) **Kolbenbürette**
Plunger type burette
Burette à piston

(30) Priorität: 18.04.1996 DE 19615386; 20.08.1996 DE 19633583; 14.11.1996 DE 19647133
(43) Veröffentlichungstag der Anmeldung: 22.10.1997
(73) Patentinhaber: Walu Labortechnik GmbH, 97877 Wertheim (DE)
(72) Erfinder: Lutz, Walter, 97877 Wertheim (DE)
(74) Vertreter: Zinnecker, Armin, Dipl.-Ing.

(56) Entgegenhaltungen:
- EP-A- 0 046 461
- EP-A- 0 334 994
- DE-A- 19 542 216
- FR-A- 2 096 275

## Beschreibung

Die Erfindung betrifft eine Kolbenbürette zur Abgabe von Flüssigkeit.

Aus der DE-C-35 01 909 ist eine Kolbenbürette zum Aufsetzen auf einen Behälter bekannt, die einen Ventilblock aufweist, an dem ein Zylinder angeordnet ist, in dem ein Kolben zur dosierten Flüssigkeitsabgabe aus dem Behälter längsverschieblich geführt ist. Der Kolben ist von Hand über einen Bedienungsknopf, ein Zahnrad und eine Zahnstange antreibbar. Ferner sind Mittel zur Erzeugung von elektrischen Impulsen in Abhängigkeit vom Ausmaß der jeweiligen Kolbenbewegung vorgesehen, die über eine elektronische Steuerschaltung eine Anzeige für das jeweils abgegebene Flüssigkeitsvolumen steuern. Mit derartigen Kolgenbüretten ist es möglich, das tatsächlich abgegebene Flüssigkeitsvolumen zu messen und anzuzeigen.

Die vorbekannte Bürette ist allerdings mit dem Nachteil verbunden, daß die Förderung eines Volumens, welches größer ist als das Volumen eines Kolbenhubes in dem Zylinder, nur mit einer durch den Saughub bewirkten Unterbrechung erfolgen kann. Wenn also ein Flüssigkeitsvolumen gefördert werden soll, das größer ist als der Kolbenhub in dem Zylinder, wird die Förderung nach Durchführung des ersten Druckhubes unterbrochen, bis der anschließende Saughub durchgeführt worden ist. Dieser intermittierende Betrieb ist in bestimmten Anwendungsfällen nicht erwünscht oder nicht zulässig.

Hiervon ausgehend liegt der Erfindung die Aufgabe zugrunde, eine Kolbenbürette zur Abgabe von Flüssigkeit vorzuschlagen, bei der die Flüssigkeitsabgabe kontinuierlich erfolgt.

Erfindungsgemäß wird diese Aufgabe durch die Merkmale des Anspruchs 1 gelöst. In dem Gehäuse der Kolbenbürette sind wenigstens zwei Kolben in entsprechenden Zylindern verschiebbar geführt. Zu den Zylindern führen Saugleitungen, in denen jeweils ein Saugventil vorgesehen ist. Auf der stromaufwärtigen Seite der Saugventile kann eine Saug-Sammelleitung vorhanden sein. Ferner führen von den Zylindern Druckleitungen weg, die mit jeweils einem Druckventil versehen sind. Stromabwärts von den Druckventilen kann eine Druck-Sammelleitung vorhanden sein. Durch einen Kurvenscheibenantrieb werden die Kolben derart angetrieben, daß eine kontinuierliche Flüssigkeitsabgabe erfolgt. Der Kurvenscheiben-Antrieb ist derart ausgestaltet, daß während des Saughubes wenigstens eines Kolbens wenigstens ein weiterer Kolben einen Druckhub durchführt. Hierdurch kann eine kontinuierliche Flüssigkeitsabgabe gewährleistet werden.

Vorteilhafte Weiterbildungen sind in den Unteransprüchen beschrieben.

Vorzugsweise sind zwei Kolben und zwei Zylinder vorhanden. Der Kurvenscheibenantrieb kann derart ausgestaltet sein, daß während des Saughubes eines Kolbens der jeweils andere Kolben einen Druckhub durchführt. Hierdurch kann eine kontinuierliche Flüssigkeitsabgabe erreicht werden.

Vorzugsweise ist für jeden Kolben eine Kurvenscheibe zum Antreiben des Kolbens vorhanden. Die Kurvenscheiben sind derart gekoppelt, daß die Flüssigkeitsabgabe kontinuierlich erfolgt.

Nach einer weiteren vorteilhaften Weiterbildung sind die Zylinder parallel zueinander und voneinander beabstandet angeordnet. Diese Lösung ist insbesondere dann von Vorteil, wenn für jeden Kolben eine Kurvenscheibe vorhanden ist.

Eine weitere vorteilhafte Weiterbildung ist gekennzeichnet durch eine einzige Kurvenscheibe zum Antreiben eines ersten Kolbens und eines zweiten Kolbens derart, daß eine kontinuierliche Flüssigkeitsabgabe erfolgt. Die beiden Kolben werden also von einer einzigen Kurvenscheibe derart angetrieben, daß eine kontinuierliche Flüssigkeitsabgabe erfolgt.

Die Anordnung kann derart getroffen sein, daß die Zylinderachsen auf einer Geraden liegen. Die Zylinderachsen können miteinander fluchten. Diese Lösung ist insbesondere dann vorteilhaft, wenn nur eine einzige Kurvenscheibe zum Antreiben beider Kolben vorhanden ist. Dann befindet sich die Kurvenscheibe zwischen beiden Kolben.

Vorzugsweise sind die Kurvenscheiben mit einer Antriebswelle verbunden. Die Kurvenscheiben können auf einer gemeinsamen Antriebswelle sitzen. Diese Lösung ist insbesondere dann vorteilhaft, wenn für jeden Kolben eine Kurvenscheibe vorhanden ist.

Nach einer weiteren vorteilhaften Weiterbildung sind die Kolben mit jeweils einem Druckteil verbunden, das gegen die jeweilige Kurvenscheibe federbelastet ist. Das Druckteil kann mit dem Kolben auch einstückig verbunden sein.

Vorzugsweise ist der Kurvenscheibenantrieb derart ausgestaltet, daß die Flüssigkeitsabgabe gleichbleibend erfolgt. Um dies zu erreichen ist der Kurvenscheibenantrieb derart ausgestaltet, daß der Drehwinkel der Kurvenscheibe bzw. der zu dieser gehörenden Welle proportional zum Weg des zugehörigen Kolbens ist. Unter Berücksichtigung der Ventilwege kann der Kurvenscheibenantrieb auch derart ausgestaltet werden, daß der Drehwinkel der Kurvenscheibe bzw. der zu dieser gehörenden Welle proportional zu der abgegebenen Flüssigkeitsmenge ist.

Besonders bevorzugt ist ferner, daß die Kolben derart mechanisch miteinander gekoppelt sind, daß eine Abwärtsbewegung eines Kolbens mit einer Aufwärtsbewegung wenigstens eines weiteren Kolbens verbunden ist.

Besonders bevorzugt ist hierbei, daß wenigstens zwei Kolben über ein um eine Schwenkachse schwenkbares Verbindungselement mechanisch miteinander gekoppelt sind. Eine derartige Lösung erweist sich insofern als vorteilhaft, als auf eine Federbeaufschlagung der Kolben verzichtet werden kann. Es ist jedoch auch eine Kombination von mechanischer Kopplung und Federbelastung möglich.

Gemäß einer weiteren vorteilhaften Ausführungsform weisen wenigstens zwei Kolben eine Zahnstange oder einen sonstigen mit einer Verzahnung ausgebildeten Außenbereich auf, welche jeweils mit einem zwischen den Kolben angeordneten, um eine Drehachse drehbaren Zahnrad kämmen. Die Abwärtsbewegung eines Kolbens führt hierbei zu einer Aufwärtsbewegung eines weiteren Kolbens und umgekehrt. Auch bei dieser Ausführungsform kann auf eine Federbeaufschlagung der jeweiligen Kolben verzichtet werden.

Die Kurvenscheiben können symmetrisch sein. In diesem Fall kann die Drehrichtung jederzeit umgekehrt werden.

Die Kurvenscheiben können allerdings auch asymmetrisch sein. In diesem Fall ist es vorteilhaft, wenn die Antriebswelle für die Kurvenscheiben eine Drehrichtungsbegrenzung aufweist. Hierdurch können Fehlbedienungen verhindert werden. Die Drehrichtungsbegrenzung kann durch eine Schlingfeder oder durch einen Freilauf bewirkt werden.

Die asymmetrische Kurvenscheibe weist vorzugsweise einen ersten Bereich mit zunehmendem Abstand vom Drehpunkt auf sowie einen zweiten Bereich mit abnehmendem Abstand vom Drehpunkt. Während der erste Bereich durchlaufen wird, findet die Förderung statt. Im zweiten Bereich wird der Saughub durchgeführt. Vorzugsweise sind die Zunahme und die Abnahme des Abstandes vom Drehpunkt jeweils proportional zum Drehwinkel, wodurch eine gleichbleibende Flüssigkeitsabgabe bewirkt wird.

Der erste Bereich kann sich über einen Drehwinkel von mehr als 180° erstrecken, vorzugsweise über einen Drehwinkelbereich von 200°. Dies hat sich in der Praxis als vorteilhaft erwiesen. Wenn sich der Drehwinkel des ersten Bereichs über mehr als 180° erstreckt, überschneiden sich die Förderhübe. Dies ist im Hinblick auf die Ventilbetätigungswege von Vorteil. In der Praxis hat sich ein Überschneidungswinkel von 20° als vorteilhaft herausgestellt.

Eine weitere vorteilhafte Weiterbildung ist dadurch gekennzeichnet, daß die Kurvenscheibe zwischen dem ersten und zweiten Bereich und/oder zwischen dem zweiten und ersten Bereich einen dritten und/oder vierten Bereich mit gleichbleibendem Abstand vom Drehpunkt aufweist. Hierdurch wird der Übergang vom Förderbetrieb zum Saugbetrieb vergleichmäßigt. Diese Übergänge finden weniger abrupt statt. Vorteilhaft ist es, wenn sich der dritte und/oder vierte Bereich über einen Drehwinkel von 20° erstrekken.

Nach einer weiteren vorteilhaften Weiterbildung weisen die Kurvenscheiben einen Bund auf, der von einem Führungsstift hintergreifbar ist. Der Bund befindet sich vorzugsweise am äußeren Rand der Kurvenscheiben. Durch den Führungsstift wird ein Abheben des Kolbens von der Kurvenscheibe verhindert. Wenn der Kolben sehr schnell bewegt wird, kann dies dazu führen, daß er trotz der oben beschriebenen Federbelastung von der Kurvenscheibe abhebt, was durch den hintergreifenden Führungsstift verhindert wird.

Ausführungsbeispiele der Erfindung werden nachstehend anhand der beigefügten Zeichnung im einzelnen erläutert. In der Zeichnung zeigt
- Fig. 1: eine erste Ausführungsform in einer Seitenansicht, teilweise im Schnitt,
- Fig. 2: einen Schnitt längs der Linie II-II in Fig. 1,
- Fig. 3: einen Schnitt längs der Linie III-III in Fig. 2,
- Fig. 4: eine zweite Ausführungsform in einer seitlichen Schnittansicht,
- Fig. 5: einen Schnitt längs der Linie V-V in Fig. 4,
- Fig. 6: zwei Ausführungsformen erfindungsgemäß verwendbarer Kurvenscheiben,
- Fig. 7: eine der Fig. 1 entsprechende Ansicht einer dritten Ausführungsform,
- Fig. 8: eine der Fig. 2 entsprechende Ansicht der Ausführungsform gem. Fig. 7,
- Fig. 9: eine der Fig. 3 entsprechende Ansicht der Ausführungsform gem. Figuren 7 und 8,
- Fig. 10: eine vierte Ausführungsform der vorliegenden Erfindung,
- Fig. 11: eine fünfte Ausführungsform der vorliegenden Erfindung,
- Fig. 12: zwei asymmetrische Kurvenscheiben,
- Fig. 13: die in Fig. 12 gezeigte Kurvenscheibe mit einem Bund in einer Vorderansicht und
- Fig. 14: die Kurvenscheibe gemäß Fig. 13 in einer Seitenansicht.

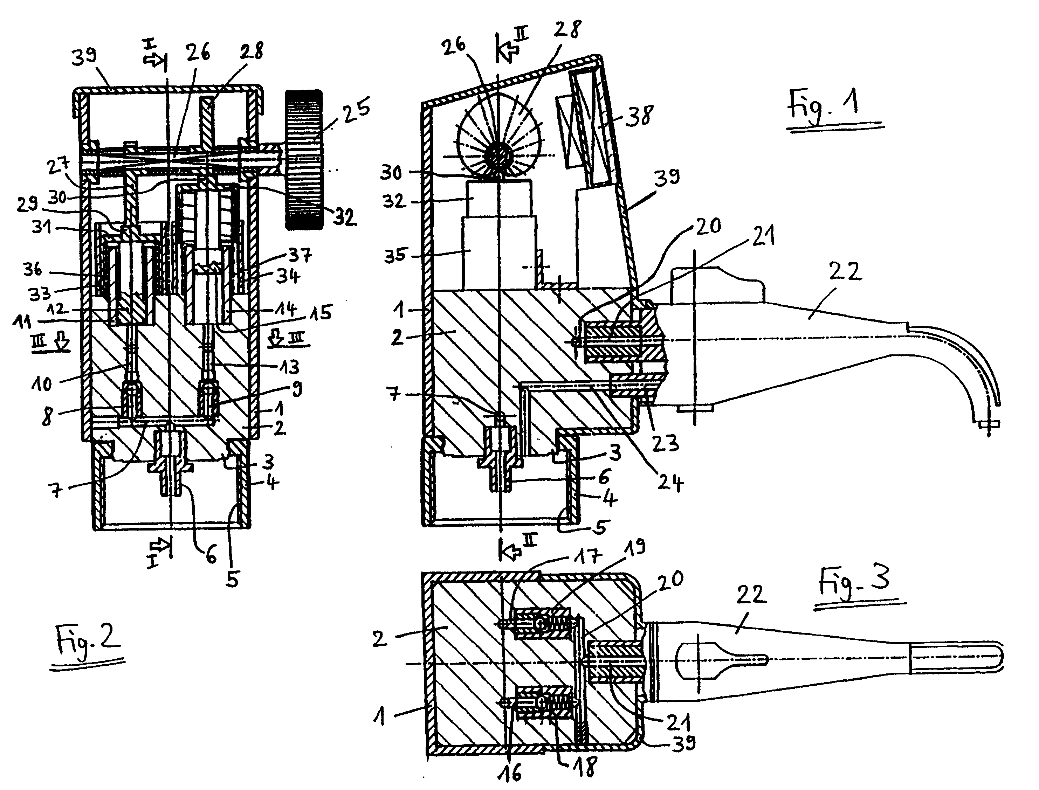

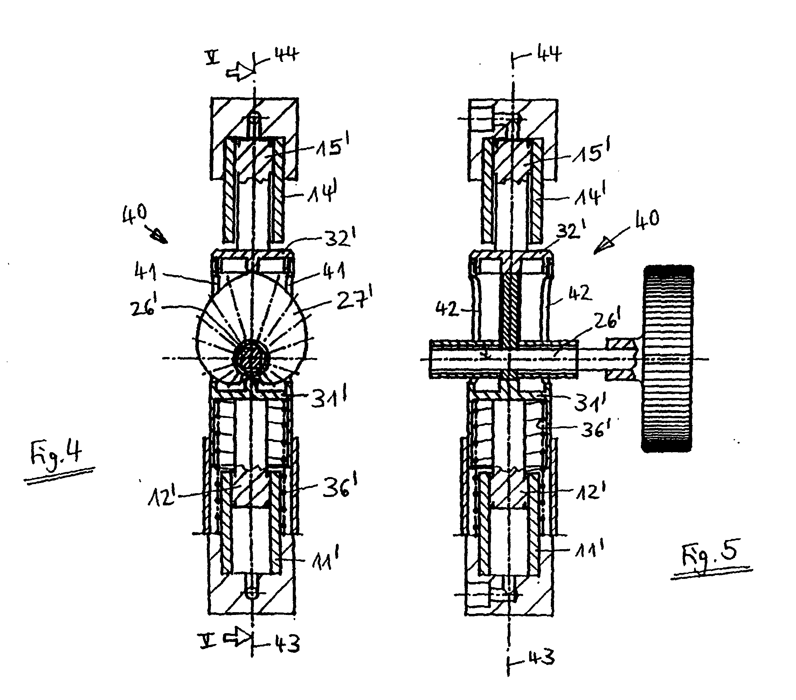

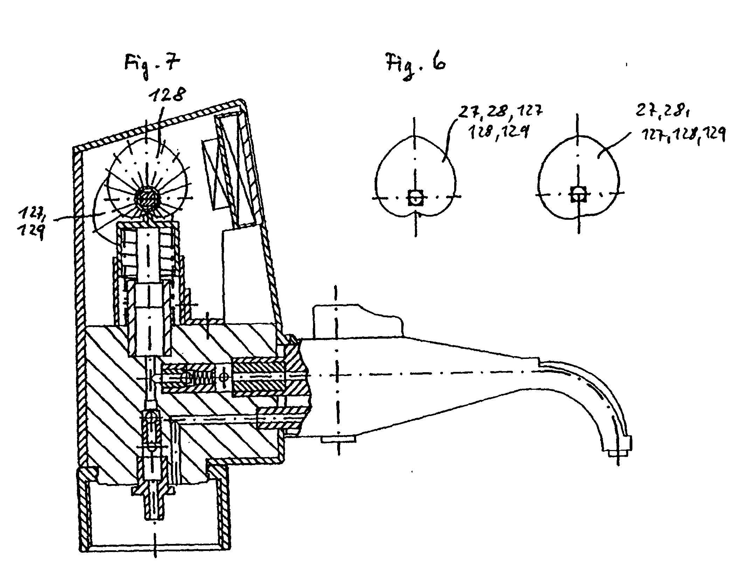

Die in den Figuren 1 bis 3 gezeigte erste Ausführungsform der Kolbenbürette zur dosierten Abgabe von Flüssigkeit aus einem Behälter besitzt ein Gehäuse 1, in dem ein Ventilblock 2 angeordnet ist, der im Bereich seines unteren Endes einen kreisförmigen Vorsprung 3 aufweist, in dessen Ringnut ein Zwischenstück 4 eingeschnappt werden kann. Das Zwischenstück 4 besitzt ein Innengewinde 5, durch das es auf einen Behälter (in der Zeichnung nicht dargestellt) aufgeschraubt werden kann. Hierbei ist das Zwischenstück 4 in der Nut des Vorsprungs 3 drehbar.

In der Mitte des Vorsprungs 3 ist ein Schlauchanschlußstück 6 vorgesehen, an dessen unteres Ende ein in den Behälter führender Schlauch (in der Zeichnung nicht dargestellt) aufgesteckt werden kann. An seinem oberen Ende ist das Schlauchanschlußstück 6 mit einer in dem Ventilblock 2 vorgesehenen Saugsammelleitung 7 verbunden, die zu dem ersten Saugventil 8 und dem zweiten Saugventil 9 führt. Vom ersten Saugventil 8 führt die erste Saugleitung 10 zum ersten Zylinder 11, in dem der erste Kolben 12 längsverschieblich geführt ist. Vom zweiten Saugventil 9 führt die zweite Saugleitung 13 zum zweiten Zylinder 14, in dem der zweite Kolben 15 längsverschieblich geführt ist. Die Zylinder 11, 14 sind parallel zueinander und voneinander beabstandet angeordnet.

Von den Saugleitungen 10, 13 zweigen in der aus Figur 3 ersichtlichen Weise eine erste und eine zweite Druckleitung 16, 17 ab, die zu einem ersten und zweiten Druckventil 18, 19 führen, deren Ausgänge durch eine Drucksammelleitung 20 miteinander verbunden sind, die in eine Ausströmleitung 21 mündet. In der Ausstoßkanüle 22 ist ferner eine Rückführleitung 23 vorhanden, die mit einer Rückführleitung 24 in dem Ventilblock 2 verbunden ist, die neben dem Schlauchanschlußstück 6 in das Innere des Zwischenstücks 4 mündet und damit eine Rückdosierung in den Behälter ermöglicht.

Die Kolben 12, 15 werden von einem Kurvenscheibenantrieb angetrieben, der eine durch ein Handrad 25 drehbare Welle 26 aufweist, die mit einer ersten Kurvenscheibe 27 und einer gegenüber dieser um 180° versetzten zweiten Kurvenscheibe 28 versehen ist. Die Kurvenscheiben 27, 28 befinden sich jeweils mit ihrem je nach Drehstellung untersten Ende mit einem nach oben weisenden Vorsprung 29, 30 in Kontakt, der am oberen Ende von jeweils einem Druckteil 31, 32 angeordnet ist. Jedes Druckteil 31, 32 ist in seinem unteren Bereich mit einem den jeweiligen Zylinder 11, 14 glockenförmig übergreifenden Bereich versehen. Die glokkenförmigen Bereiche werden außen von jeweils einer Zylinderführung 33, 34 geführt. In dem Ringraum zwischen der Außenseite der Zylinder 11, 14 und der Innenseite der glockenförmigen Verlängerung ist jeweils eine Druckfeder 36, 37 angeordnet, die an der jeweiligen Unterseite gegen die Oberseite des Ventilblocks 2 abgestützt ist und die das jeweilige Druckteil 31, 32 in Richtung nach oben vorbelastet, so daß die Vorsprünge 29, 30 gegen die jeweilige Kurvenscheibe 27, 28 gedrückt werden. Auf diese Weise ist gewährleistet, daß der Hub der Kolben 12, 15 von den Kurvenscheiben 27, 28 gesteuert wird.

Die Kurvenscheiben 27, 28 haben die aus Figur 1 ersichtliche Außenkontur, die derart ausgestaltet ist, daß die Flüssigkeitsabgabe gleichbleibend erfolgt. Der Drehwinkel der Welle 26 ist also proportional zum Weg des jeweiligen Kolbens 12, 15. Ferner sind die Kurvenscheiben 27, 28 in der aus Figur 1 ersichtlichen Weise symmetrisch ausgestaltet. Dies hat zur Folge, daß sowohl bei einer Drehung der Welle 26 im Uhrzeigersinn als auch bei einer gegenläufigen Drehung der Welle 26 gegen den Uhrzeigersinn jeweils dasselbe Flüssigkeitsvolumen gefördert wird. Wenn die Drehrichtung der Welle 26 bei einer beliebigen Stellung dieser Welle 26 umgekehrt wird, wird der bis dahin im Saughub befindliche Kolben in den Druckhub gebracht. Da gleichzeitig der vorher im Druckhub befindliche Kolben in den Saughub gebracht wird, findet weiterhin eine Flüssigkeitsabgabe statt, die nach wie vor zur Drehgeschwindigkeit der Welle 26 proportional ist. Es ist also vollkommen egal, ob die Welle 26 im Uhrzeigersinn oder gegen den Uhrzeigersinn gedreht wird. Es ist ferner egal, ob und wie oft und nach welchen Stellungen die Drehrichtung der Welle 26 geändert wird.

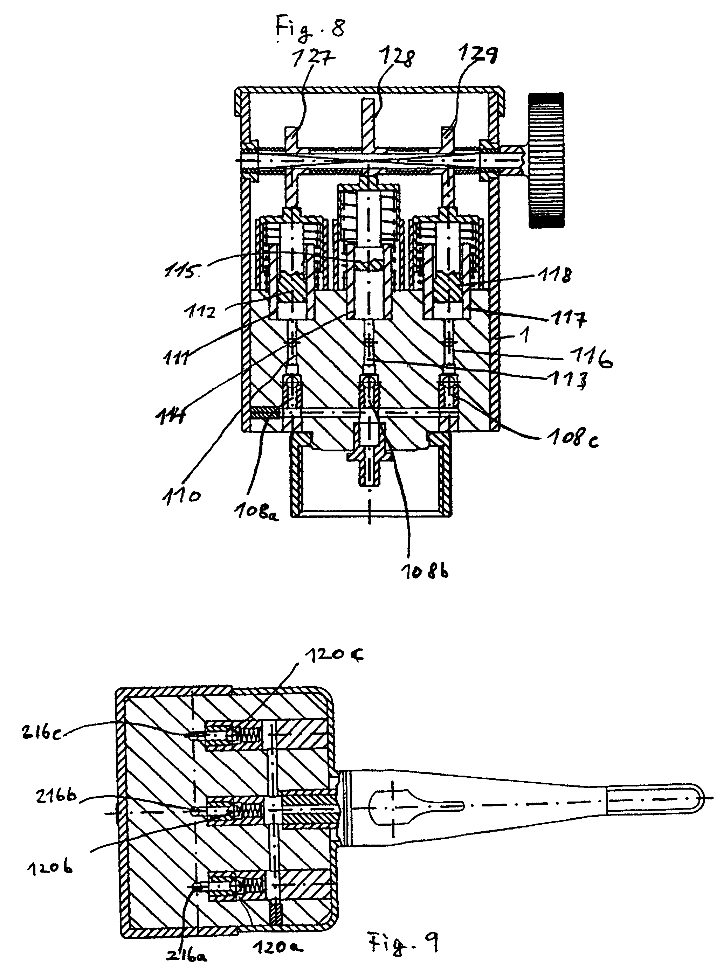

In Fig. 6 sind schematisch zwei Ausführungsformen der erfindungsgemäß verwendbaren Kurvenscheiben 27, 28 dargestellt. Man erkennt, daß die linke der dargestellten Kurvenscheiben die symmetrische Form aufweist, die auch in der Ausführungsform gemäß Fig. 1 dargestellt ist. Es ist jedoch gleichfalls möglich, eine asymmetrische Form, wie sie beispielsweise der rechten der in Fig. 6 gezeigten Kurvenscheiben entspricht, zu verwenden. Eine derartige asymmetrische Form kann sich beispielsweise dann als vorteilhaft erweisen, wenn eine Anpassung der Förderrate an konkrete Gegebenheiten erwünscht ist.

Die Bürette weist in der Zeichnung nicht dargestellte Mittel zum Messen des abgegebenen Flüssigkeitsvolumens auf. Die Meßwerte werden dann von der Anzeigevorrichtung 38 angezeigt. Die Bürette ist modulförmig aufgebaut. Das Hauptmodul besteht aus dem Gehäuse 1 und dem Ventilblock 2. In den Vorsprung 3 des Ventilblocks 2 kann das Zwischenstück 4 eingeschnappt werden. Ferner kann das Gehäuse 1 mit einem Kanülengehäuse 39 verbunden werden, vorzugsweise durch einen Schnellverschluß. Die Leitungsverbindungen zwischen Ventilblock 2 und Ausstoßkanüle 22 sind in der aus den Figuren 1 und 3 ersichtlichen Weise als Schnellverbindungen bzw. Steckverbindungen ausgestaltet.

In den Figuren 4 und 5 ist eine abgewandelte Ausführungsform gezeigt, bei der die Mittenachsen 43, 44 der Zylinder 11', 14' auf einer Geraden liegen, also miteinander fluchten. Die Welle 26' ist zwischen den Zylindern 11', 14' angeordnet. Diese Welle 26' ist mit lediglich einer einzigen Kurvenscheibe 27' verbunden, die dieselbe Außenkontur wie die Kurvenscheiben 27, 28 der ersten Ausführungsform aufweist.

Die Druckteile 31', 32' sind miteinander zu einem einzigen Druckteil 40 verbunden. Im Verbindungsbereich sind Aussparungen 41 für die Kurvenscheibe 27' und 42 für die Welle 26' vorhanden, so daß sich das Druckteil 40 ungehindert hin- und herbewegen kann. Wie aus den Figuren 4 und 5 ersichtlich, ist nur eine einzige Druckfeder 36' erforderlich. Dementsprechend muß das Druckteil 40 nur auf derjenigen Seite, auf der sich die Druckfeder 36' befindet, eine glockenförmige Verlängerung und einen Führungszylinder aufweisen.

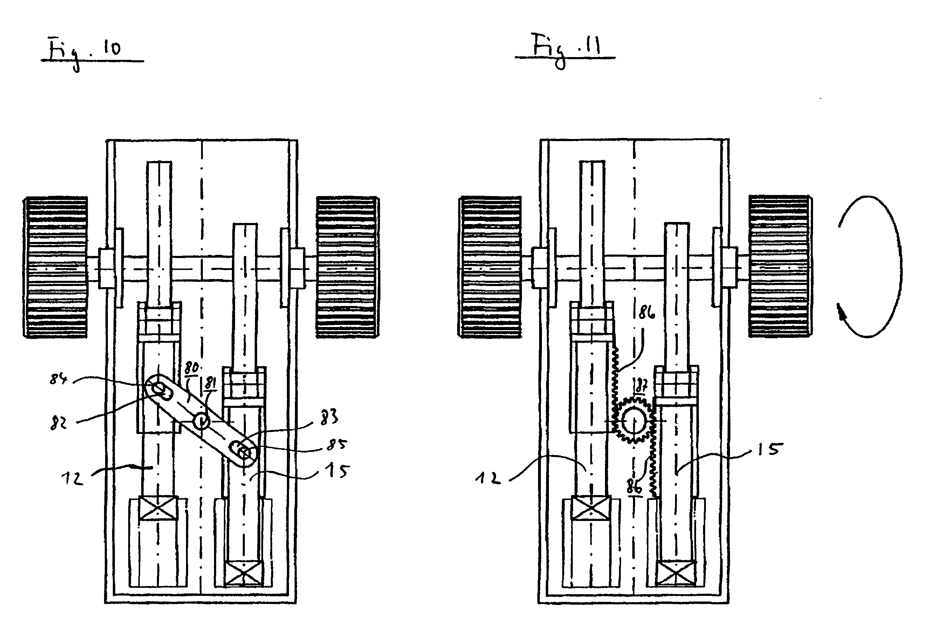

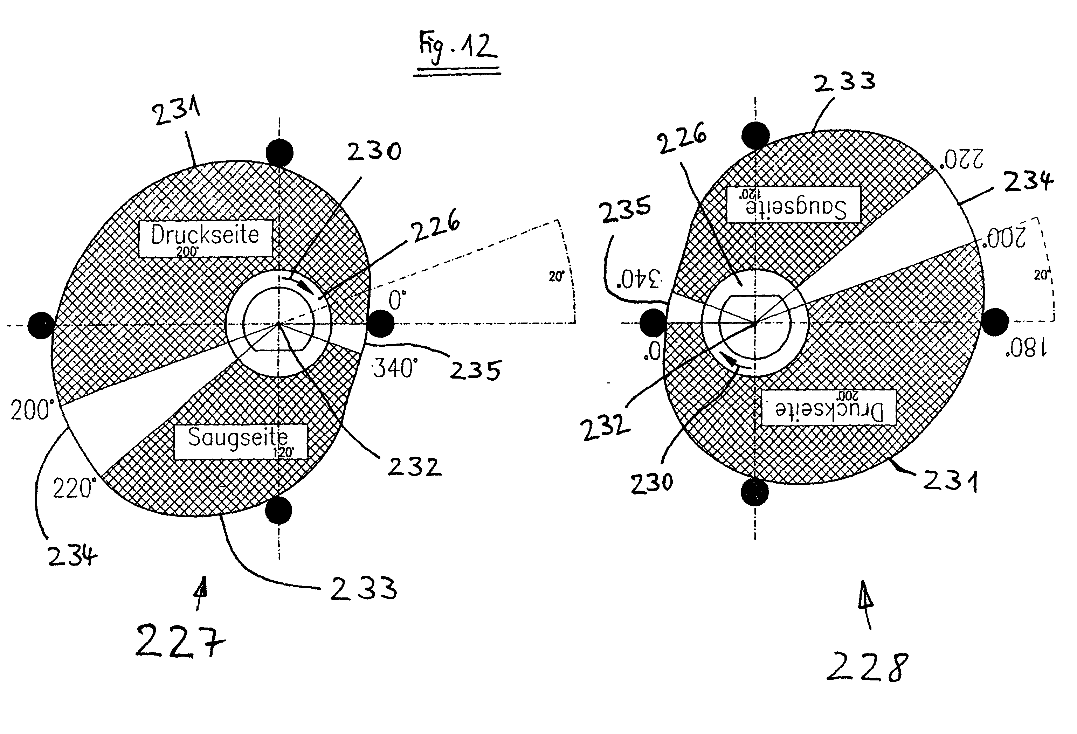

In den Figuren 7 bis 9 ist eine weitere Ausführungsform der vorliegenden Erfindung gezeigt, welche sich im wesentlichen von der in den Figuren 1 bis 3 dargestellten Ausführungsform dadurch unterscheidet, daß drei Kolben-Zylinder-Einheiten vorhanden sind, deren Kolben 112, 115, 118 in den Zylindern 111, 114, 117 verschiebbar sind. Zu den Zylindern führen jeweils Saugleitungen 110, 113, 116, in denen jeweils ein Saugventil 108a, 108b, 108c vorhanden ist. In analoger Weise sind, wie aus Fig. 9 ersichtlich, jeweils von den Zylindern wegführende Druckleitungen 216a, 216b, 216c mit jeweils einem Druckventil 120a, 120b, 120c vorgesehen. In Fig. 8 erkennt man, daß zu jeder Kolben-Zylinder-Einheit eine Kurvenscheibe 127, 128, 129 gehört. In Fig. 7 erkennt man die Scheibe 128 sowie, teilweise verdeckt, die Kurvenscheiben 127 bzw. 129. Die Kurvenscheiben können, wie in Fig. 7 dargestellt, symmetrisch ausgebildet sein; es ist jedoch auch möglich, die in der Fig. 6 dargestellte asymmetrische Form zu verwenden. Die übrigen Bauteile der in den Figuren 7 bis 9 dargestellten Ausführungsform entsprechen im wesentlichen den Bauteilen der in den Figuren 1 bis 3 dargestellten Ausführungsform, so daß bezüglich ihrer Funktion auf die obige Beschreibung verwiesen werden kann.

In den Fig. 10 und 11 werden Ausführungsformen gezeigt, bei denen die im Ausführungsbeispiel der Fig. 1 bis 3 vorhandenen Druckfedern 36, 37 nicht erforderlich sind. Um zu gewährleisten, daß der Hub der Kolben von den Kurvenscheiben gesteuert wird, sind bei den Ausführungsformen nach den Fig. 10 und 11 mechanische Kopplungsmechanismen bzw. Getriebe zwischen den Kolben vorhanden, durch die die Kolben derart mechanisch miteinander gekoppelt werden, daß die Abwärtsbewegung eines Kolbens zwangsweise mit einer entsprechenden Aufwärtsbewegung wenigstens eines weiteren Kolbens verbunden ist und umgekehrt.

Die in Fig. 10 dargestellten Kolben 12, 15 sind mittels eines Verbindungshebels 80 miteinander gekoppelt, der um eine zwischen den Kolben liegende, senkrecht zu den Kolbenrichtungen verlaufende Drehachse 81 verschwenkbar ist. Die Kolben 12, 15 weisen Stifte 84 bzw. 85 auf, welche in Langlöcher 82, 83 des Verbindungshebels 80 eingreifen. Eine Aufwärts- bzw. Abwärtsbewegung eines der beiden Kolben 12, 15 bewirkt ein Verschwenken des Verbindungshebels 80 um seine Schwenkachse 81, wodurch der jeweils andere Kolben eine umgekehrte Bewegung durchführt. Die Vorsprünge 84, 85 sind in den Langlöchern 82, 83 zum Längenausgleich verschiebbar.

In Fig. 11 ist ein Verzahnungsmechanismus dargestellt, welcher ebenfalls bei Abwärts- bzw. Aufwärtsbewegung eines Kolbens 12, 15 eine entsprechend umgekehrte Bewegung des anderen Kolbens bewirkt. Hierbei sind auf den Außenseiten der Kolben 12, 15 jeweils Zahnstangen 86 ausgebildet, die mit einem Zahnrad 87 kämmen. Das Zahnrad ist um eine zwischen den Kolben liegende, senkrecht zu den Kolbenachsen verlaufende Achse drehbar gelagert. Man erkennt unmittelbar, daß beispielsweise eine Abwärtsbewegung des Kolbens 12 eine Drehung des Zahnrades 87 gegen den Uhrzeigersinn bewirkt, wodurch der Kolben 15 in eine Aufwärtsbewegung versetzt wird.

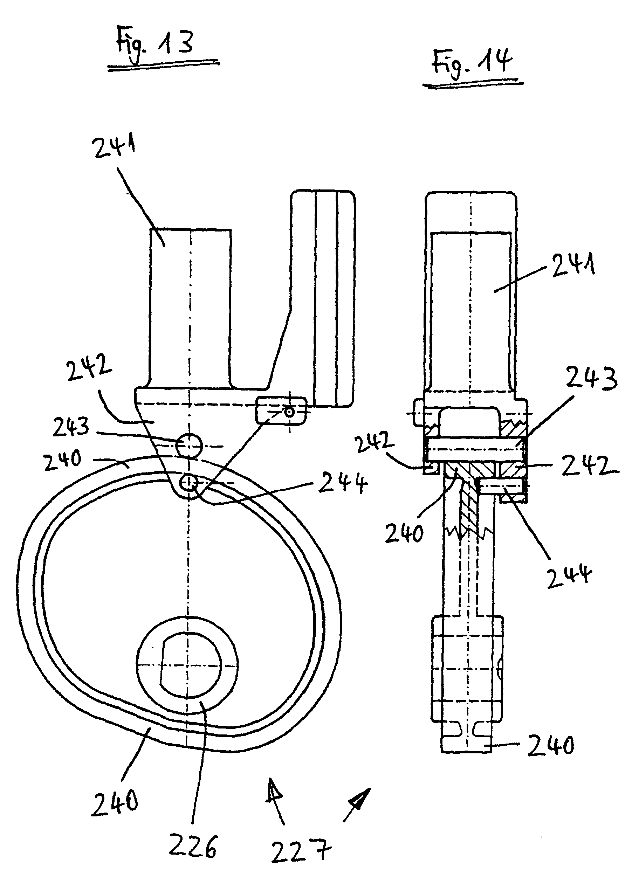

In der Fig. 12 sind zwei asymmetrische Kurvenscheiben 227, 228 dargestellt, deren Außenkonturen gleich sind. Sie sind um 180° gegeneinander verdreht. Die Kurvenscheiben sitzen auf einer Welle 226, die sich im Uhrzeigersinn in Richtung des Pfeils 230 dreht. Die Welle 226 besitzt eine Drehrichtungsbegrenzung, die sicherstellt, daß lediglich eine Drehung im Uhrzeigersinn auf die asymmetrischen Kurvenscheiben 227, 228 übertragen wird, nicht jedoch eine Drehung im Gegenuhrzeigersinn.

Die Kurvenscheiben 227, 228 weisen einen ersten Bereich 231 mit zunehmendem Abstand vom Drehpunkt 232 der Welle 226 auf und einen zweiten Bereich 233 mit abnehmendem Abstand vom Drehpunkt 232. Die Zunahme bzw. Abnahme des Abstandes der Außenkontur der Kurvenscheiben 227, 228 ist proportional zum Drehwinkel.

Der erste Bereich 231 erstreckt sich über einen Drehwinkel von 200°. Er beginnt bei der Kurvenscheibe 227 bei 0° und endet bei 200°.

Zwischen dem ersten Bereich 231 und dem zweiten Bereich 233 ist ein dritter Bereich 234 mit gleichbleibendem Abstand vom Drehpunkt vorhanden, der sich über einen Drehwinkelbereich von 20° erstreckt. Am Ende des dritten Bereichs 234 beginnt der zweite Bereich 233, der sich über einen Drehwinkelbereich von 120° erstreckt. Zwischen dem zweiten Bereich 233 und dem ersten Bereich 231 ist ein vierter Bereich 235 vorhanden, der einen gleichbleibenden Abstand seiner Außenkontur vom Drehpunkt 232 aufweist und der sich über einen Drehwinkelbereich von 20° erstreckt. An den vierten Bereich 235 schließt sich dann der erste Bereich 231 an.

Die Bereiche der Kurvenscheibe 228 sind gegenüber denjenigen der Kurvenscheibe 227 um 180° versetzt. Wie aus Fig. 12 ersichtlich, überschneiden sich die ersten Bereich 231 der beiden Kurvenscheiben 227, 228 jeweils um einen Drehwinkelbereich von 20°. Hierdurch sowie durch die dritten und vierten Bereiche 234, 235 werden die Ventilwege ausgeglichen und eine gleichmäßige, also drehwinkelproportionale Förderung erreicht.

Die Fig. 13 und 14 zeigen eine Kurvenscheibe 227, die an ihrer Außenkontur einen Bund 240 aufweist. Der Kolben 241 besitzt einen Flansch 242, dessen beabstandete, parallele Schenkel eine Steuerrolle 243 aufnehmen, die in Bohrungen der genannten Schenkel drehbar gelagert ist und die auf der Außenkontur bzw. Außenfläche der Kurvenscheibe 227 abrollt. An einem Schenkel des Flansches 242 ist ferner ein Führungsstift 244 vorgesehen, der parallel zu und im Abstand von der Steuerrolle 243 in dem Schenkel drehbar gelagert ist und der den Bund 240 hintergreift. Durch den hintergreifenden Führungsstift 244 wird ein Abheben der Steuerrolle 243 von der Kurvenscheibe 227 auch bei einer hohen Kolbengeschwindigkeit verhindert.

## Patentansprüche

1. Kolbenbürette zur Abgabe von Flüssigkeit mit
einem Gehäuse (1),
wenigstens zwei Kolben (12, 15; 12', 15'; 112, 115, 118), die in Zylindern (11, 14; 11', 14'; 111, 114, 117) verschiebbar sind,
jeweils zu den Zylindern führenden Saugleitungen (10, 13; 110, 113, 116) mit jeweils einem Saugventil (8, 9; 108a, 108b, 108c),
jeweils von den Zylindern wegführenden Druckleitungen (16, 17; 216a, 216b, 216c) mit jeweils einem Druckventil (18, 19; 120a, 120b, 120c)
und einem Kurvenscheibenantrieb (27, 28; 27'; 127, 128, 129; 227, 228) zum Antreiben der Kolben derart, daß eine kontinuierliche Flüssigkeitsabgabe erfolgt.

2. Kolbenbürette nach Anspruch 1, **dadurch gekennzeichnet, daß** zwei Kolben und zwei Zylinder vorhanden sind.

3. Kolbenbürette nach Anspruch 1 oder 2, **dadurch gekennzeichnet, daß** für jeden Kolben eine Kurvenscheibe zum Antreiben des Kolbens vorhanden ist.

4. Kolbenbürette nach einem der vorhergehenden Ansprüche, **dadurch gekennzeichnet, daß** die Zylinder (11, 14; 111, 114, 117) parallel zueinander und voneinander beabstandet angeordnet sind.

5. Kolbenbürette nach einem der vorhergehenden Ansprüche, **gekennzeichnet durch** eine einzige Kurvenscheibe (27') zum Antreiben eines ersten Kolbens (12') und eines zweiten Kolbens (15') derart, daß eine kontinuierliche Flüssigkeitsabgabe erfolgt.

6. Kolbenbürette nach einem der vorhergehenden Ansprüche, **dadurch gekennzeichnet, daß** die Zylinderachsen (43, 44) auf einer Geraden liegen.

7. Kolbenbürette nach einem der vorhergehenden Ansprüche, **dadurch gekennzeichnet, daß** die Kurvenscheiben mit einer Antriebswelle (26; 26'; 226) verbunden sind.

8. Kolbenbürette nach einem der vorhergehenden Ansprüche, **dadurch gekennzeichnet, daß** die Kolben (12, 15; 12', 15'; 112, 115, 118) mit jeweils einem Druckteil (31, 32; 31', 32', 40) verbunden sind, das gegen die jeweilige Kurvenscheibe federbelastet (36, 37; 36') ist.

9. Kolbenbürette nach einem der vorhergehenden Ansprüche, **dadurch gekennzeichnet, daß** der Kurvenscheibenantrieb derart ausgestaltet ist, daß die Flüssigkeitsabgabe gleichbleibend erfolgt.

10. Kolbenbürette nach einem der vorstehenden Ansprüche, **dadurch gekennzeichnet, daß** die Kolben (12, 15) derart mechanisch miteinander gekoppelt sind, daß eine Abwärtsbewegung eines Kolbens mit einer Aufwärtsbewegung wenigstens eines weiteren Kolbens verbunden ist.

11. Kolbenbürette nach Anspruch 10, **dadurch gekennzeichnet, daß** wenigstens zwei Kolben( 12, 15) über ein um eine Schwenkachse (81) schwenkbares Verbindungselement (80) mechanisch miteinander gekoppelt sind.

12. Kolbenbürette nach Anspruch 10, **dadurch gekennzeichnet, daß** wenigstens zwei Kolben (12, 15) jeweils eine Zahnstange (86) aufweisen, welche jeweils mit einem zwischen den Kolben (12, 15) angeordneten Zahnrad (87) kämmt.

13. Kolbenbürette nach einem der vorhergehenden Ansprüche, **dadurch gekennzeichnet, daß** die Kurvenscheiben symmetrisch sind.

14. Kolbenbürette nach einem der Ansprüche 1 bis 12, **dadurch gekennzeichnet, daß** die Kurvenscheiben (227, 228) asymmetrisch sind.

15. Kolbenbürette nach Anspruch 14, **dadurch gekennzeichnet, daß** die Antriebswelle für die Kurvenscheiben eine Drehrichtungsbegrenzung aufweist.

16. Kolbenbürette nach Anspruch 14 oder 15, **dadurch gekennzeichnet, daß** die Kurvenscheibe (227, 228) einen ersten Bereich (231) mit zunehmendem Abstand vom Drehpunkt (232) aufweist und einen zweiten Bereich (233) mit abnehmendem Abstand vom Drehpunkt (232).

17. Kolbenbürette nach Anspruch 16, **dadurch gekennzeichnet, daß** sich der erste Bereich (231) über einen Drehwinkel von mehr als 180° erstreckt, vorzugsweise über einen Drehwinkelbereich von 200°.

18. Kolbenbürette nach Anspruch 16 oder 17, **dadurch gekennzeichnet, daß** die Kurvenscheibe (227, 228) zwischen dem ersten und zweiten Bereich (231, 233) und/oder zwischen dem zweiten und ersten Bereich (233, 231) einen dritten und/oder vierten Bereich (234, 235) mit gleichbleibendem Abstand vom Drehpunkt (232) aufweist, wobei der dritte und/oder vierte Bereich sich vorzugsweise über einen Drehwinkel von 20° erstrecken.

19. Kolbenbürette nach einem der vorhergehenden Ansprüche, **dadurch gekennzeichnet, daß** die Kurvenscheiben (227) einen Bund (240) aufweisen, der von einem Führungsstift (244) hintergreifbar ist.

## Claims

1. Plunger-type burette for dispensing liquid, having
a housing (1),
at least two plungers (12, 15; 12', 15'; 112, 115, 118), which are displaceable in cylinders (11, 14; 11', 14'; 111, 114, 117),
suction lines (10, 13; 110, 113, 116) respectively leading to the cylinders, each with a suction valve (8, 9; 108a, 108b, 108c),
pressure lines (16, 17; 216a, 216b, 216c) respectively leading away from the cylinders, each with a pressure valve (18, 19; 120a, 120b, 120c),
and a cam-disc drive (27, 28; 27'; 127, 128, 129, 227, 228) for driving the plungers in such a way that a continuous dispensing of liquid takes place.

2. Plunger-type burette according to Claim 1, **characterized in that** there are two plungers and two cylinders.

3. Plunger-type burette according to Claim 1 or 2, **characterized in that** for each plunger there is a cam disc for driving the plunger.

4. Plunger-type burette according to one of the preceding claims, **characterized in that** the cylinders (11, 14; 111, 114, 117) are arranged parallel to one another and at a distance from one another.

5. Plunger-type burette according to one of the preceding claims, **characterized by** a single cam disc (27') for driving a first plunger (12') and a second plunger (15') in such a way that a continuous dispensing of liquid takes place.

6. Plunger-type burette according to one of the preceding claims, **characterized in that** the cylinder axes (43, 44) lie on a straight line.

7. Plunger-type burette according to one of the preceding claims, **characterized in that** the cam discs are connected to a drive shaft (26; 26'; 226).

8. Plunger-type burette according to one of the preceding claims, **characterized in that** the plungers (12, 15; 12', 15'; 112, 115, 118) are respectively connected to a pressure part (31, 32; 31', 32', 40), which is spring-loaded (36, 37; 36') against the respective cam disc.

9. Plunger-type burette according to one of the preceding claims, **characterized in that** the cam-disc drive is designed in such a way that the dispensing of liquid takes place in a constant manner.

10. Plunger-type burette according to one of the preceding claims, **characterized in that** the plungers (12, 15) are mechanically coupled to one another in such a way that a downward movement of one plunger is accompanied by an upward movement of at least one further plunger.

11. Plunger-type burette according to Claim 10, **characterized in that** at least two plungers (12, 15) are mechanically coupled to one another via a connecting element (80) which can be swivelled about a swivel axis (81).

12. Plunger-type burette according to Claim 10, **characterized in that** at least two plungers (12, 15) respectively have a toothed rack (86), which respectively meshes with a gear wheel (87) arranged between the plungers (12, 15).

13. Plunger-type burette according to one of the preceding claims, **characterized in that** the cam discs are symmetrical.

14. Plunger-type burette according to one of Claims 1 to 12, **characterized in that** the cam discs (227, 228) are asymmetrical.

15. Plunger-type burette according to Claim 14, **characterized in that** the drive shaft for the cam discs has a direction-of-rotation limitation.

16. Plunger-type burette according to Claim 14 or 15, **characterized in that** the cam disc (227, 228) has a first region (231) with an increasing distance from the point of rotation (232) and a second region (233) with a decreasing distance from the point of rotation (232).

17. Plunger-type burette according to Claim 16, **characterized in that** the first region (231) extends over an angle of rotation of more than 180°, preferably over an angle of rotation range of 200°.

18. Plunger-type burette according to Claim 16 or 17, **characterized in that** the cam disc (227, 228) has between the first and second region (231, 233) and/or between the second and first region (233, 231) a third and/or fourth region (234, 235) with a constant distance from the point of rotation (232), the third and/or fourth region preferably extending over an angle of rotation of 20°.

19. Plunger-type burette according to one of the preceding claims, **characterized in that** the cam discs (227) have a collar (240), which can be engaged from behind by a guide pin (244).

## Revendications

1. Burette à piston pour dispenser du liquide comportant
un boîtier (1),
au moins deux pistons (12, 15 ; 12', 15' ; 112, 15, 118) qui peuvent être déplacés dans des cylindres (11, 14 ; 11', 14' ; 111, 114, 117),
des conduites d'aspiration (10, 13 ; 110, 113, 116) conduisant chacune aux cylindres, présentant chacune une soupape d'aspiration (8, 9 ; 108a, 108b, 108c),
des conduites forcées (16, 17 ; 216a, 216b, 216c) s'éloignant chacune des cylindres, présentant chacune une soupape de compression (18, 19 ; 120a, 120b, 120),
et une commande à came (27, 28 ; 27', 127, 128, 129 ; 227, 228) pour entraîner les pistons de manière à ce que un débit continu de liquide en résulte.

2. Burette à piston selon la revendication 1, **caractérisée en ce que** deux pistons et deux cylindres sont prévus.

3. Burette à piston selon les revendications 1 ou 2, **caractérisée en ce que** pour chaque piston une came pour entraîner le piston est prévu.

4. Burette à piston selon l'une quelconque des revendications précédentes, **caractérisée en ce que** les cylindres (11, 14 ; 111, 114, 117) sont disposés réciproquement en parallèle et réciproquement espacés.

5. Burette à piston selon l'une quelconque des revendications précédentes, **caractérisée en ce qu'**une seule came (27') est prévue pour entraîner un premier piston (12') et un second piston (15') de manière à assurer un débit continu de liquide.

6. Burette à piston selon l'une quelconque des revendications précédentes, **caractérisée en ce que** les axes de cylindres (43, 44) se trouvent sur une droite.

7. Burette à piston selon l'une quelconque des revendications précédentes, **caractérisée en ce que** les cames sont raccordées à un arbre moteur (26 ; 26' ; 226).

8. Burette à piston selon l'une quelconque des revendications précédentes, **caractérisée en ce que** les pistons (12, 15 ; 12', 15' ; 112, 115, 118) sont raccordés chacun à une pièce de compression (31, 32 ; 31', 32', 40) à ressort (36, 37 ; 36') qui agit contre la came.

9. Burette à piston selon l'une quelconque des revendications précédentes, **caractérisée en ce que** la commande à came est conçue de manière à ce que le débit de liquide reste égal.

10. Burette à piston selon l'une quelconque des revendications précédentes, **caractérisée en ce que** les pistons (12, 15) sont accouplés mécaniquement entre eux de manière à ce que le mouvement descendant d'un piston est associé au mouvement ascendant d'au moins un autre piston.

11. Burette à piston selon la revendication 10, **caractérisée en ce qu'**au moins deux pistons (12, 15) sont accouplés entre eux de manière mécanique par l'intermédiaire d'un élément de raccordement (80) pivotant autour d'un axe de pivotement (81).

12. Burette à piston selon la revendication 10, **caractérisée en ce qu'**au moins deux pistons (12, 15) présentent chacun une crémaillère (86) qui s'engrène dans une roue dentée (87) disposée entre les pistons (12, 15).

13. Burette à piston selon l'une quelconque des revendications précédentes, **caractérisée en ce que** les cames sont symétriques.

14. Burette à piston selon l'une quelconque des revendications 1 à 12, **caractérisée en ce que** les cames (227, 228) sont asymétriques.

15. Burette à piston selon la revendication 14, **caractérisée en ce que** l'arbre moteur pour les cames présente une limitation de la direction de pivotement.

16. Burette à piston selon les revendications 14 ou 15, **caractérisée en ce que** la came (227, 228) présente une première zone (231) présentant une distance croissante par rapport au point de pivotement (232) et une seconde zone (233) présentant une distance décroissante par rapport au point de pivotement (232).

17. Burette à piston selon la revendication 16, **caractérisée en ce que** la première zone (231) s'étend à un angle de pivotement de plus de 180°, de préférence à un angle de pivotement de 200°.

18. Burette à piston selon les revendications 16 ou 17, **caractérisée en ce que** la came (227, 228) présente entre la première et la seconde zone (221, 233) et/ou entre la seconde et la première zone (233, 231) une troisième et/ou une quatrième zone (234, 235) à distance égale du point de pivotement (232), la troisième et/ou la quatrième zone s'étendant de préférence à un angle de pivotement de 20°.

19. Burette à piston selon l'une quelconque des revendications précédentes, **caractérisée en ce que** les cames (227) présentent un collet (240) dans lequel un goujon de guidage (244) peut s'engager par l'arrière.
